# EUROPEAN PATENT APPLICATION

(11) **EP 1 004 923 A2**
(43) Date of publication of application: **31.05.2000**
(21) Application number: 99123533.4
(22) Date of filing: 25.11.1999
(51) Int. Cl.: G02F 1/1335

(54) **Liquid crystal display device with light diffusing layer**

(30) Priority: 26.11.1998 JP 33587498
(71) Applicant: SANYO ELECTRIC CO., LTD., Moriguchi-shi, Osaka (JP)
(72) Inventor: Noritake, Kazuto, Gifo-shi, Gifu (JP); Ogawa, Shinji, Ohgaki-shi, Gifu (JP)
(74) Representative: Hager, Thomas J.

(57) **Abstract**

An LCD includes a TFT substrate 10 provided with TFTS and reflective display electrodes 19 and a protection film 33 formed on a light diffusing layer 34 into which bead particles 37 are mixed, thereby preventing occurrence of projections in an counter electrode 35 and an alignment film owing to the projections of the bead particles 37 so that they have flat surfaces. Therefore, a voltage can be uniformly applied to liquid crystal 21. In such a configuration, the LCD permits a display to be viewed over a wide range of field of view by provision of a light diffusing layer, and provides a uniform display by application of a uniform voltage to a liquid crystal.

## Description

### BACKGROUND OF THE INVENTION

### 1. Field of the Invention

The present invention relates to a liquid crystal display device (LCD), which are provided with an optical diffusing layer.

### 2. Description of the Related Art

Conventionally, a reflective type display has been proposed which light incident from a viewer side is reflected to view a display.

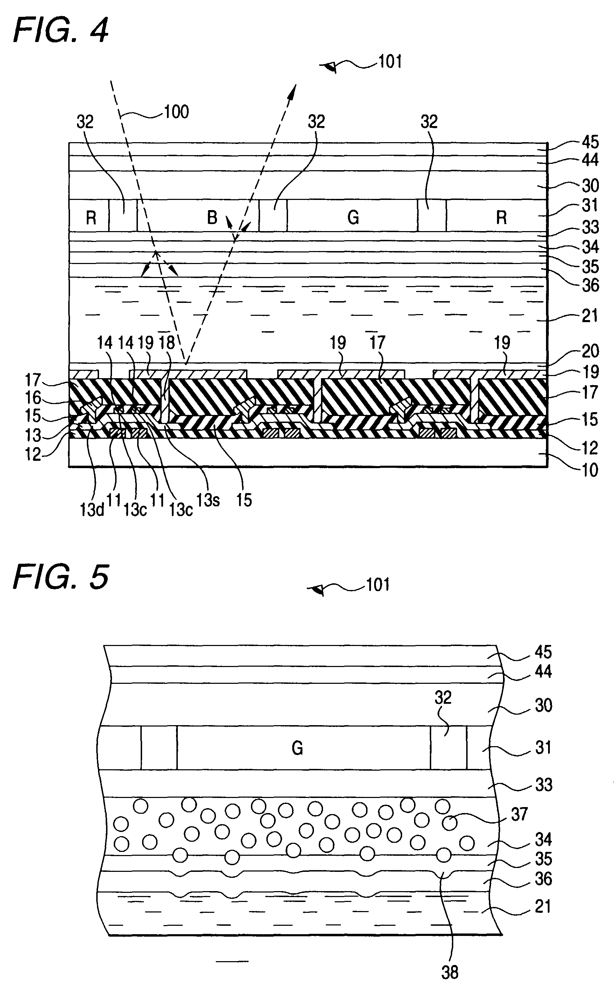

Fig. 4 is a sectional view of a conventional reflective type LCD.

As shown in Fig. 4, in the conventional reflective type LCD, on an insulating substrate 10 made of quartz glass, non-alkali glass, etc. thin film transistors (TFTs) which are switching elements are formed.

As shown in Fig. 4, on the insulating substrate (TFT substrate) 10, gate electrodes 11 made of refractory metal such as chromium(Cr), molybdenum(Mo), etc., a gate insulating film 12 and an active layer 13 of a polysilicon film are successively formed.

The active layer 13 includes a channel 13c formed above the gate electrodes 11, and source 13s and drain 13d on both sides of the channel 13c which are formed by ion-implantation using a stopper insulating film 14 on the channel 13c as a mask.

An interlayer insulating film 15 composed of an SiO₂ film, SiN film and SiO₂ film deposited in this order, is formed on the entire surface over the gate insulating film 12, active layer 13 and stopper insulating film 14. A contact hole made so as to correspond to the drain 13d is filled with metal such as aluminum (Al) to form a drain electrode 16. A planarization insulating film 17 made of e.g. organic resin is formed on the entire surface so that the surface is flat. Another contact hole is formed at the position corresponding to the source 13s of the planarization insulating film 17. Reflective display electrodes 19 of aluminum, each of which is brought into contact with the source 13s through the contact hole and also serves as a source electrode, are formed on the planarization insulating film 17. An alignment film 20 made of organic resin such as polyimide for aligning the liquid crystal 21 is formed on the surface inclusive of the respective reflective display electrodes 19.

An counter electrode substrate 30 of quartz glass, non-alkaline glass, etc. is facing to the TFT substrate 10. On the side of the TFT substrate 10, on the counter electrode substrate 30, successively formed are a color filter 31 for the respective colors of red (R), green (G) and blue (B) provided with a black matrix 32 for light interruption, a protection film 33 of resin, a light diffusing layer 34 formed on the entire surface, an counter electrode 35 and alignment film 36. On the side opposite to (not facing) the TFT substrate, the electrode substrate 30 includes a retardation plate 44 and a polarizing plate 45.

The counter electrode substrate 30 and TFT substrate 10 are bonded to each other in their periphery by a sealing adhesive material (not shown) so as to provide a gap therebetween. The gap is filled with twisted nematic (TN) liquid crystal 21.

As indicated by broken line with an arrow, natural light 100 is externally incident from the polarizing plate 45 on the side of a viewer 101. The light is transmitted through the retardation plate 44, counter electrode substrate 30, color filters 31 and protection film 33, light diffusing layer 34, counter electrode 35, alignment film 36, TN liquid crystal 21 and alignment film 20 on the TFT substrate 10, and is reflected by the reflective display electrode 19. The reflected light is transmitted through the respective layers in an opposite direction to the incident light, and is emitted from the polarizing plate 45 on the counter electrode substrate 30 to enter the eye 101 of a viewer.

Fig. 5 is a partially enlarged view in which the reflective type LCD of Fig. 4 is partially enlarged.

As shown in Fig. 5, the light diffusing layer 34 is formed on the protection film 33 for protecting the color filter 31 on the counter electrode substrate 30.

The light diffusing layer 34 is composed of a transparent insulating film containing acryl resin as a base material and bead particles 37 having a different refractive index mixed into the insulating film. In order to improve the diffusion degree of light by the light diffusing layer 34, a larger amount of bead particles must be mixed.

However, if the mixing amount of the bead particles 37 is increased excessively, when the light diffusing layer 34 is applied to the protection film 33 by a spinner, the acryl resin protrudes owing to the bead particles so that projections 38 are produced on the surface of the light diffusing layer 34.

Therefore, when the counter electrode 35 of a transparent conductive film of ITO (Indium Tin Oxide) is formed on the light diffusing layer 34, unevenness(asperities) are produced on the counter electrode 35 owing to the projects 38 on the surface of the light diffusing layer 38. As a result, the surface of the counter electrode 35 is not flat.

Projections are also produced on the alignment film 36 arranged on the counter electrode 35, thereby making it impossible to provide a flat surface of the alignment film.

Thus, in the case that no voltage is applied to the electrodes, defects caused by the bad orientation in the liquid crystal 21 are easy to occur owing to the unevenness of the surface of the orientation film.

Further in the case that voltage is applied to the electrodes, owing to the unevenness of the surface of the orientation film, a voltage is not uniformly applied to the liquid crystal so that changes in the orientation in the liquid crystal 21 occur, thereby making it impossible to give uniform display.

### SUMMARY OF THE INVENTION

An object of the present invention is to provide a LCD which permits a display to be viewed over a wide range of field of view by provision of a light diffusing layer, and provides a uniform display by application of a uniform voltage to a liquid crystal.

Another object of the present invention is to reduce a defect of the orientation in the liquid crystal by reducing an unevenness of the surface of the orientation film.

In order to attain the above object of the present invention, in accordance with a first aspect of the present invention, there is provided a liquid crystal display comprising:
a first substrate on the surface of which a first electrode is formed;
a second substrate on which a light diffusing layer of an insulating material containing bead particles, a protection film and a second electrode are formed successively, said second electrode facing to said first electrode; and
a liquid crystal material sandwiched between the first and the second substrate.

A second aspect of the device is a liquid crystal display according to the first aspect, wherein said first electrode is a display electrode which is connected to a switching element formed on the first substrate.

A third aspect of the device is a liquid crystal display according to the first aspect, wherein an interface between said protection film and said second electrode is flat.

A fourth aspect of the device is a liquid crystal display according to the first aspect, wherein said protection film is made of a material capable of absorbing an evenness of said light diffusing layer attributable to the bead particles so that an interface between said protection film and said second electrode is flat.

A fifth aspect of the device is a liquid crystal display according to the first aspect, wherein said protection film is made of a material capable of absorbing an evenness of said light diffusing layer attributable to the bead particles.

A sixth aspect of the device is a liquid crystal display according to the first aspect, wherein alignment films are arranged between said first and said second electrode and said liquid crystal, respectively.

A seventh aspect of the device is a liquid crystal display according to the sixth aspect, wherein an interface between the alignment films and said liquid crystal are arranged is flat.

An eighth aspect of the device is a liquid crystal display according to the fifth aspect, wherein said protection film is made of a resin comprising an acryl resin.

A ninth aspect of the device is a liquid crystal display according to the fifth aspect, wherein said protection film has a thickness of 0.1 to 10µm.

A tenth aspect of the device is a liquid crystal display according to the fifth aspect, wherein said protection film has a thickness of 1 to 5µm.

An eleventh aspect of the device is a liquid crystal display according to the first aspect, wherein said protection film is a film formed by spin coating.

A twelfth aspect of the device is a liquid crystal display according to the first aspect, wherein said light diffusing film is resin film which is formed by spin-coating acryl resin containing bead particles each having a diameter of 1 to 5µm.

A thirteenth aspect of the device is a liquid crystal display according to the first aspect, wherein said light diffusing layer has a thickness of 2 to 30µm.

A fourteenth aspect of the device is a liquid crystal display according to the first aspect, wherein said insulating material of the light diffusing layer has a refractive index equal to that of said protection film.

A fifteenth aspect of the device is a liquid crystal display according to the thirteenth aspect, wherein said second substrate is provided with a color filter located below said light diffusing layer.

A sixteenth aspect of the device is a liquid crystal display according to the fifteenth aspect, wherein said second substrate is provided with a polarizing plate.

A seventeenth aspect of the device is a liquid crystal display according to the sixteenth aspect, wherein said first electrode is a reflective type display electrode.

An eighteenth aspect of the device is a liquid crystal display according to the seventeenth aspect, wherein said second substrate is provided with a color filter located below said light diffusing layer.

A nineteenth aspect of the device is a liquid crystal display according to the eighteenth aspect, wherein said second substrate is provided with a polarizing plate.

A twentieth aspect of the device is a liquid crystal display according to the seventeenth aspect, wherein said first electrode is stacked on an upper layer of a switching element through an interlayer insulating film, the switching element being formed on a surface of said first substrate, said first electrode being connected to said switching element through a contact-hole formed in said interlayer insulating film.

In the above aspects of the present invention, the LCD permits a display to be viewed over a wide range of field of view by provision of the light diffusing layer, and provides a uniform display by application of a uniform voltage to the liquid crystal.

The above and other objects and features of the present invention will be more apparent from the following description taken in conjunction with the accompanying drawings.

### BRIEF DESCRIPTION OF THE DRAWINGS

Fig. 1 is a sectional view of a first embodiment of the LCD according to the present invention;
Fig. 2 is a partially enlarged view of the LCD according to the present invention;
Fig. 3 is a sectional view of a second embodiment of the LCD according to the present invention;
Fig. 4 is a sectional view of a conventional reflective type LCD; and
Fig. 5 is a partially enlarged view of the LCD shown in Fig. 4.

### DESCRIPTION OF THE PREFERRED EMBODIMENTS

Now referring to the drawings, an explanation will be given of the embodiments of the LCD according to the present invention.

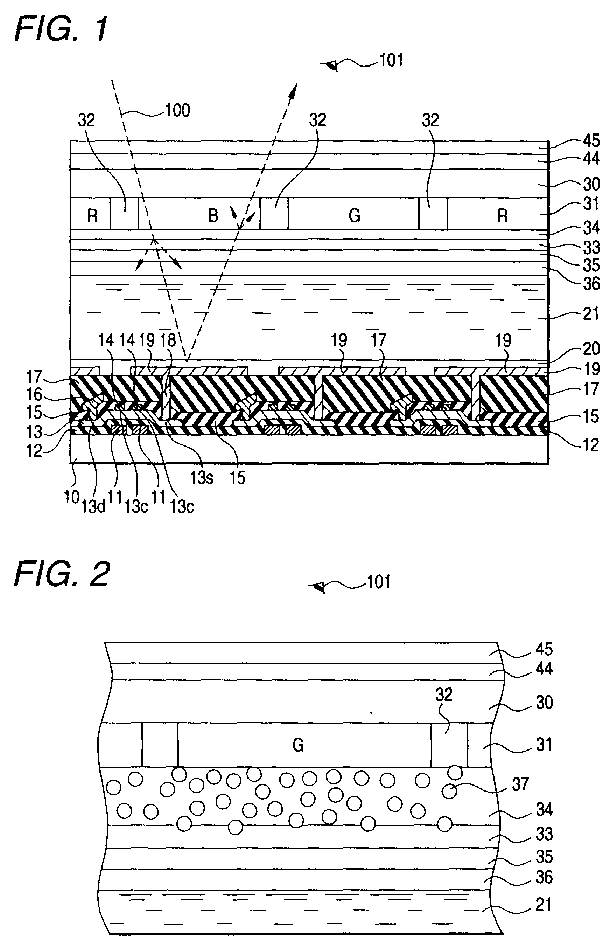

Fig. 1 is a sectional view of a first embodiment of the reflective type LCD according to the present invention. As shown in Fig. 1, on an insulating substrate 10 made of quartz glass, non-alkali glass, etc. thin film transistors (TFTs) which are switching elements are formed.

In this embodiment, the structure on the insulating film 10, which succeeds from provision of the gate electrode 11 of refractory metal such as Cr, Mo, to that of the planarization insulating film 17 is the same as the conventional structure, is not explained here.

On the planarization insulating film 17, reflective display electrodes 19 of conductive reflective material such as aluminum (Al), silver (Ag), etc., are provided each of which is connected to the source 13s of the active layer 13 of a polysilicon film. An alignment film 20, which is made of polyimide and serves to orient the liquid crystal, is formed on the entire surface inclusive of the respective reflective display electrodes 19.

A counter electrode substrate 30 of quartz glass, non-alkaline glass, etc. is arranged facing to the insulating substrate 10. On the side of the liquid crystal of the counter electrode substrate 30, a color filter 31 for the respective colors of red (R), green (G) and blue (B) equipped with a black matrix 32 for light interruption is formed. A light diffusing layer 34 is formed on the color filter 31. The light diffusing layer 34 is composed of an insulating film containing acryl resin as a base material and bead particles mixed thereinto. A protection film 33 of acryl resin is formed thereon. A counter electrode 35 facing to the respective reflective display electrodes 19 is formed on the entire surface of the protection film 33. An alignment film 36 is formed on the entire surface.

On the side where the liquid crystal is not arranged, i.e. the side of a viewer, of the counter electrode substrate 30, a retardation (λ/4) plate 44 and a polarizing plate 45 are successively formed.

The liquid crystal 21 may be e.g. TN liquid crystal.

As illustrated by dotted line with an arrow in Fig. 1, natural light 100 is externally incident from the polarizing plate 45 on the side of a viewer 101. The light is transmitted through the retardation plate 44, counter electrode substrate 30, and color filter 31 to reach the light diffusing layer 34. The light diffused there is transmitted through the protection film 33, counter electrode 35, alignment film 36, liquid crystal 21 and alignment film 20 on the insulating substrate 10 to reach the reflective display electrode 19. The light is reflected by the reflective display electrode 19. The reflected light reaches the light diffusing layer 34 and is diffused there. The light diffused by the light diffusing layer 34 is transmitted through the retardation plate 44 and polarizing plate 45 to enter the eye 101 of a viewer.

Thus, the light is diffused twice by the light-diffusing layer 34 when it goes to and comes from the liquid crystal so that the viewer can see a uniform and bright display on the entire surface of the LCD.

Fig. 2 shows a partially sectional view of the reflective type LCD of Fig. 1.

As shown in Fig. 1, on the side of the counter electrode substrate 30 where the liquid crystal 21 is located, the light diffusing layer 34 is formed on the color filter 31 provided with the black matrix 32.

This light diffusing layer 34 is formed in such a manner that after the color filter 31 has been formed, its entire surface is coated with the acryl resin as a base material mixed with bead particles 37. In the coating step, the acryl resin is prepared as a liquid so as to have a viscosity of 20-30 c.p. and coated at rotation speed between 2000-3000 c.p.m. The thickness thereof ranges from about 8 µm to about 11 µm. The bead particles 37 are roughly spherical in shape with a diameter of 2 - 5 µm.

A transparent insulating film, e.g. acryl resin is applied onto the entire surface of the light diffusing layer 34 using a spinner to form the protection film 33. A material of ITO is sputtered on the protection film 33 to form the counter electrode 35. The alignment film 36 made of resin such as polyimide for aligning the liquid crystal 21 is formed thereon. In this case, if the base material of the light diffusing layer 34 has a different refractive index from that of the protection film 33, the light incident on the light diffusing layer 34 is reflected at the boundary between itself and the protection film 34 and outgoes toward the viewer side. In order to obviate such an inconvenience, the refractive index of the protection film 33 is preferably equal to that of the base material of the light-diffusing layer 34. In this embodiment, the protection film 34 is made of acryl resin having a refractive index of 1.4 - 1.6.

In this way, the respective layers are completed on the side of liquid crystal 21 of the counter electrode substrate 30 equipped with the light diffusing layer 34. On the side where the liquid crystal is not arranged, i.e. the viewer side, of the counter electrode substrate 30, a retardation (λ/4) plate 44 and a polarizing plate 45 are successively formed.

As understood from the description hitherto made, even if the projections each with a height of about 200 A - about 2000 A are produced on the light diffusing layer 34 because of the bead particles 37 (whose mixing quantity has been increased to improve the diffusion degree of the light diffusing layer 34 formed on the color filter film 31), since the protection film 33 is provided on the light diffusing layer 34, no projection occur in the alignment film 36. Thus, the counter electrode and alignment film can have a flat surface.

Specifically, even if the light diffusing layer 34 has projections because of the bead particles 37, the protection film is formed on the light diffusing layer 34 so that it is made of the material capable of absorbing the height of the projections, i.e. providing a flat surface regardless with the unevenness of the surface of the light diffusing layer 34, e.g. acryl resin. Therefore, the surface of the protection film becomes flat. Accordingly, the surfaces of the counter electrode 35 and the alignment film 36 which are formed on the protection film 33 can be also made flat.

As a result, the voltage applied to the counter electrode 35 is uniformly applied to the liquid crystal 21 so that no changes in the orientation of the liquid crystal is produced. This prevents poor display with inconsistencies. In addition, the provision of the light diffusing layer 34 can provide a uniform and bright display on the LCD. And when no voltage is applied to the electrodes, good orientation of the liquid crystal 21 is kept owing to the flatness of the surface of the orientation film.

Preferably the said protection film has a thickness of 0.1 to 10µm, more preferably 1 to 5µm.

Further the light diffusing film preferably is made of resin film which is formed by spin-coating acryl resin containing bead particles each having a diameter of 1 to 5µm.

Preferably the light diffusing layer has a thickness of 2- 30µm, more preferably 20 to 30µm.

Although the embodiment described above was directed to a reflective type LCD, the present invention can be also applied to a transmissive type LCD to provide the same effect.

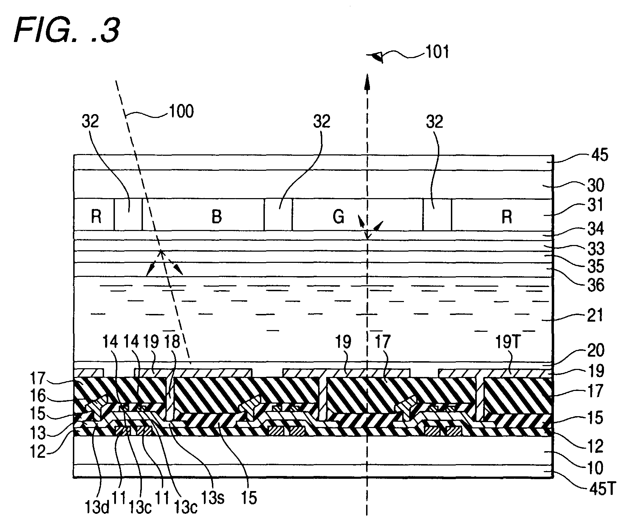

Fig. 3 is a sectional view of a second embodiment of the transmissive LCD according to the present invention. As shown in Fig. 3, the points that the LCD is different from the LCD of the first embodiment shown in Fig. 1 are the following three points. First point of them is that a polarizing plate 45T is formed on a rear surface of the TFT substrate 10. Second point of them is that a transparent ITO electrode 19T is formed in place of the reflective display electrode 19. Third point of them is that a retardation (λ/4) plate 44 formed on the rear side of the counter electrode substrate 30 as the first substrate is removed. In Fig.3, same numerals are added to the same parts of the first embodiment. And detailed explanation is submitted.

Although the embodiment described above employed the color filter, the present invention can be also applied to other cases where the color filter 31 is not provided in Figs. 1 and 2. More specifically, even if the light diffusing layer 34 is provided on the counter electrode substrate 30, the projections can be absorbed by the protection layer 33 formed thereon so that the surface of the protection layer 33 is flat. Thus, the surfaces of the counter electrode 35 and the alignment film 36 which are formed on the protection film 33 can be also made flat. In the case that no voltage is applied to the electrodes, owing to the evenness of the surface of the orientation film, defects caused by the bad orientation in the liquid crystal 21 are reduced. Further in the case that voltage is applied to the electrodes, the good orientation in the liquid crystal 21 can be kept.

Further in the case that voltage is applied to the electrodes, owing to the evenness of the surface of the orientation film, a voltage can be uniformly applied to the liquid crystal thereby making it possible to give uniform display. Namely, as a result, in the voltage applied to the counter electrode 35 is uniformly applied to the liquid crystal 21, and hence the poor display with inconsistencies does not occur.

## Claims

1. A liquid crystal display comprising:
a first substrate on the surface of which a first electrode is formed;
a second substrate on which a light diffusing layer made of an insulating material containing bead particles, a protection film and a second electrode are formed successively, said second electrode facing to said first electrode; and
a liquid crystal material sandwiched between the first and the second substrate.

2. A liquid crystal display according to claim 1, wherein said first electrode is a display electrode which is connected to a switching element formed on the first substrate.

3. A liquid crystal display according to claim 1 or claim 2, wherein an interface between said protection film and said second electrode is flat.

4. A liquid crystal display according to claim 1 or claim 2, wherein said protection film is made of a material capable of absorbing an evenness of said light diffusing layer attributable to the bead particles so that an interface between said protection film and said second electrode is flat.

5. A liquid crystal display according to claim 1 or claim 2, wherein said protection film is made of a material capable of absorbing an evenness of said light diffusing layer attributable to the bead particles.

6. A liquid crystal display according to anyone of claims 1 to 5, wherein alignment films are arranged between said first electrode and said liquid crystal, and between said second electrode and said liquid crystal, respectively.

7. A liquid crystal display according to anyone of claims 1 to 6, wherein an interface between the alignment films and said liquid crystal are arranged is flat.

8. A liquid crystal display according to anyone of claims 1 to 7, wherein said protection film is made of a resin comprising an acryl resin.

9. A liquid crystal display according to anyone of claims 1 to 8, wherein said protection film has a thickness of 0.1 to 10µm.

10. A liquid crystal display according to anyone of claims 1 to 8, wherein said protection film has a thickness of 1 to 5 µm.

11. A liquid crystal display according to anyone of claims 1 to 10, wherein said protection film is a film formed by spin coating.

12. A liquid crystal display according to anyone of claims 1 to 11, wherein said light diffusing film is resin film which is formed by spin-coating acryl resin containing bead particles each having a diameter of 1 to 5µm.

13. A liquid crystal display according to anyone of claims 1 to 12, wherein said light diffusing layer has a thickness of 2- 30µm.

14. A liquid crystal display according to anyone of claims 1 to 13, wherein said insulating material of the light diffusing layer has a refractive index equal to that of said protection film.

15. A liquid crystal display according to anyone of claims 1 to 14, wherein said second substrate is provided with a color filter located below said light diffusing layer.

16. A liquid crystal display according to anyone of claims 1 to 15, wherein said second substrate is provided with a polarizing plate.

17. A liquid crystal display according to anyone of claims 1 to 16, wherein said first electrode is a reflective type display electrode.

18. A liquid crystal display according to claim 17, wherein said second substrate is provided with a color filter located below said light diffusing layer.

19. A liquid crystal display according to claim 17 or claim 18, wherein maid second substrate is provided with a polarizing plate.

20. A liquid crystal display according to anyone of claims 1 to 19, wherein said first electrode is stacked on an upper layer of a switching element through an interlayer insulating film, the switching element being formed on a surface of said first substrate, said first electrode being connected to said switching element through a contact-hole formed in said interlayer insulating film.
